# EUROPEAN PATENT SPECIFICATION

(11) **EP 0 529 629 B1**
(45) Date of publication and mention of the grant of the patent: **20.11.1996**
(21) Application number: 92114646.0
(22) Date of filing: 27.08.1992
(51) Int. Cl.: B60G 7/00, B60G 11/27, F16F 1/38, F16F 1/54

(54) **Adjustable bushing**
Verstellbare Buchse
Douille réglable

(30) Priority: 30.08.1991 US 753040
(43) Date of publication of application: 03.03.1993
(73) Proprietor: NAI NEWAY, INC., Muskegon, MI 49442 (US)
(72) Inventor: Pierce, William C., Muskegon, Michigan 49445 (US)
(74) Representative: Schaumburg, Thoenes & Thurn

(56) References cited:
- BE-A- 479 697
- BE-A- 494 084
- DE-A- 1 430 703
- DE-U- 7 327 342
- FR-A- 680 434
- FR-A- 753 892
- FR-A- 2 126 016
- US-A- 2 562 381
- US-A- 4 615 539

## Description

### BACKGROUND OF THE INVENTION

### Field of the Invention

This invention relates to elastomeric bushings and, more particularly, to bushings which are adjustable to permit their use in openings of varying dimensions. In another aspect, the invention relates to suspension systems for vehicles with improved bushings.

### Description of Related Art

Elastomeric bushings have long been used in mounting one part to another while permitting limited articulation between the two parts. Such elastomeric bushings typically comprise a metal outer tube, a metal inner tube, and an elastomeric insert mounted between the inner and outer tubes. Such a bushing configuration is disclosed in US-A-4 615 539 and FR-A-680 434. In a typical installation, the bushing is used to connect a first member with a second member in an articulatable connection. The outer tube of the bushing is usually received within an aperture in the first member and the second member is received within the inner tube. The outer tube is securely fixed to the first member and the second member is securely fixed to the inner tube. The intermediate elastomeric portion serves to permit limited articulation of the first member relative to the second. A typical application includes the bushed connection of an axle to a trailing arm in a trailing arm air spring suspension for a vehicle.

In using such a bushing in a trailing arm suspension, the first member typically comprises a control arm (also known as the trailing arm). Typically, such control arms are formed by casting, fabricating or drop-forging processes. The aperture which results from such manufacturing operations typically has two distinct problems which may drastically affect the mounting of the bushing in the aperture. First, the average diameter of the aperture will not achieve a range of close tolerances. For example, the best available tolerance of the diameter of an aperture in a drop-forged trailing arm is approximately ±.015 inches. This creates significant problems in mounting a bushing within the aperture. First, if the diameter of the aperture is less than the diameter of the outer tube, the bushing cannot be received within the aperture. Secondly, if the diameter of the aperture significantly exceeds the diameter of the outer tube, the outer tube will be loosely mounted in the aperture which will result in increased wear on the bushing, or require a welding operation to securely fix the outer tube within the over-sized aperture.

The second problem which often results from a drop-forged or fabricated control arm is that the aperture can be out-of-round at any point along the axis of the aperture. The aperture may be elliptically shaped at various points along the length thereof. If this elliptical shape exists, the outer tube may or may not be mountable within the aperture. For example, if the shorter diameter of the elliptical opening is less than the diameter of the outer tube, but the longer diameter of the elliptical shape is greater than the diameter of the outer tube then the outer tube can still be received within the aperture provided the overall circumference of the elliptical opening of the aperture is greater than the circumference of the outer tube. The outer tube will flex somewhat, to assume the elliptical shape and accommodate the shorter diameter. However, if the overall circumference of the elliptical opening does not exceed the circumference of the outer tube, then the outer tube cannot be received in the aperture. Therefore, it is seen that the outer tube can accommodate some variations in the geometry of the aperture, however, there is a limit to the variations which the outer tube can withstand.

One solution for overcoming the tolerance and the out-of-round problems is to machine or otherwise finish the aperture to a suitable shape and dimension for receiving the bushing. Unfortunately, such operations are costly, time consuming and labor intensive and therefore not preferred.

Another solution to accommodate dimensional and geometrical differences in the aperture is to eliminate the outer tube from the bushing and press-fit only the inner tube and elastomeric portion into the aperture. The elastomeric portion does not have the same tolerance limitations as the metal outer tubing and can accommodate the geometrical and dimensional variations in the aperture. Unfortunately, this structure results in increased wear on the elastomeric portion thereby shortening the life span of the bushing. The life span of the bushing is effectively cut in half by eliminating the outer sleeve and utilizing only the elastomeric portion and inner tube, therefore, making this solution decidedly unacceptable.

### SUMMARY OF INVENTION

The invention improves upon bushings found in the prior art by providing a bushing with a variable outer diameter or circumference such that it may be securely fixed within an aperture of predetermined circumference at optimum tolerances and, consequently, lower cost. The bushing can overcome certain dimensional and geometrical variations in the aperture.

According to the invention, there is provided an elastomeric bushing for mounting a first member to a second member wherein the first member has an aperture with a predetermined circumference. The bushing is receivably mounted within the aperture and comprises an inner element, an outer element and an elastomeric insert. The inner element is adapted to be securely fixed to the second member. The outer element is adapted to be received within the aperture. The elastomeric insert is compressively retained between the inner and outer elements. The outer element further comprises an adjustable portion such that the outer element has a circumference nominally greater than the predetermined circumference of the aperture. The adjustable portion of the outer element permits the circumference thereof to be adjusted so that the bushing can be tightly received within the aperture.

Preferably, the adjustable portion of the elastomeric bushing comprises an axially extending slit in the outer element.

In another aspect of the invention, the adjustable portion comprises an axially extending inner directed bend in the outer element.

In another aspect of the invention, the outer element is split axially and has a first edge and a second edge. The adjustable portion comprises the first edge having a tongue and the second edge having a complementary groove, wherein the tongue is received in the groove.

In yet another aspect of the invention, the adjustable portion of the elastomeric bushing comprises axial corrugations in the outer element. Preferably, the corrugations are radially arranged around the entire circumference of the outer member.

In another aspect of the invention, the outer element has an annular lip on each of the ends of the outer element. The annular lip is directed radially inward to facilitate press-fitting of the outer element in the aperture. Preferably, the circumference of the annular lip is slightly less than the circumference of the aperture.

In still another aspect of the invention, a suspension system has a trailing arm, a hanger bracket for pivotably mounting the trailing arm to a vehicle frame, an air spring mounted to another end of the trailing arm and adapted to mount to a vehicle frame, and an axle bracket adapted to mount an axle to the trailing arm wherein the axle bracket and/or the hanger bracket is mounted to the trailing arm through the adjustable bushing described above.

Preferably, the cross-sectional shape of the outer element is generally circular. In addition, the cross-sectional shape of the inner element is generally circular.

### BRIEF DESCRIPTION OF THE DRAWINGS

The invention will now be described with reference to the following drawings, in which:
FIG. 1 is a perspective view of a first embodiment of an elastomeric bushing according to the invention;
FIG. 2 is a sectional view of the first embodiment of the elastomeric bushing according to the invention as installed with first and second members;
FIG. 3 is a cross-sectional view of the first embodiment of the elastomeric bushing taken along lines 3-3 of FIG. 2;
FIG. 4 is a cross-sectional view of a second embodiment of the elastomeric bushing similar to the view of FIG. 3;
FIG. 5 is a perspective view of a third embodiment of the elastomeric bushing according to the invention;
FIG. 6 is a cross-sectional view of the third embodiment of the elastomeric bushing according to the invention;
FIG. 7 is a partial end view of the third embodiment of the elastomeric bushing according to the invention;
FIG. 8 is a partial sectional view of the third embodiment of the bushing taken along lines 8-8 of FIG. 7;
FIG. 9 is a partial end view of a fourth embodiment of the elastomeric bushing according to the invention;
FIG. 10 is a partial sectional view of the fourth embodiment of the bushing taken along lines 10-10 of FIG. 9; and
FIG. 11 is a cross-sectional view of a fifth embodiment of the elastomeric bushing according to the invention.

### DESCRIPTION OF THE PREFERRED EMBODIMENT

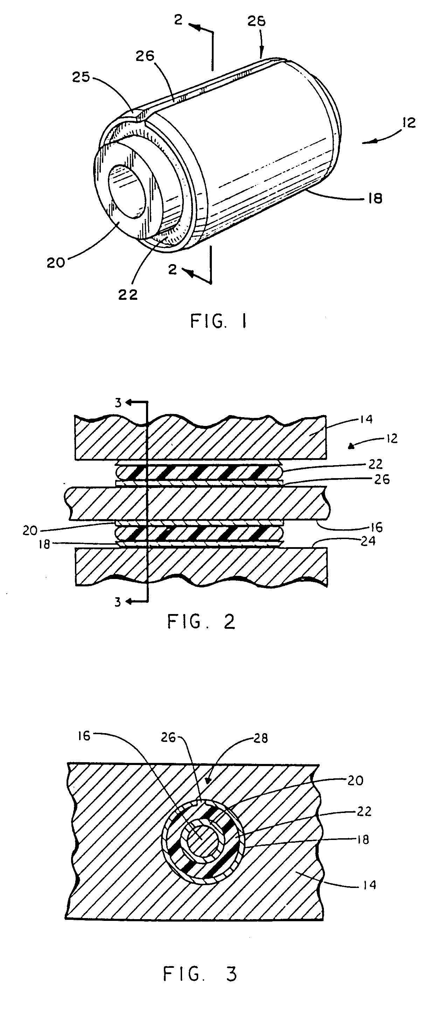

Referring now to the drawings, and to FIG. 1 in particular, an elastomeric bushing 12 comprises an outer element 18, an inner element 20 and an elastomeric insert 22 compressively retained between the outer and inner elements. The outer element further comprises an adjustable portion 28 which permits limited variation in the circumference or outer diameter of the outer element 18. The radial edge 25 on each end of outer element 18 is tapered to facilitate press-fitting of the bushing 18 within a suitable aperture, as described below.

As seen in FIG. 2, an elastomeric bushing 12 is mounted to a first member 14. The bushing 12 functions to connect a second member 16 to the first member 14 and at the same time to permit limited articulation of the members with respect to each other. The outer element 18 is adapted to be securely fixed in an aperture 24 of the first member 14. Similarly, the second member 16 is received in an aperture 26 in the inner element 20 and is securely fixed thereto. The elastomeric insert 22 may be bonded by adhesive, extrusion or otherwise to the inner and outer elements 18, 20, but it may also be press-fit into engagement between the inner and outer elements.

Elastomeric bushings have a wide variety of applications including, for example, use in a truck suspension mounting. In a vehicle suspension, the bushing is used in the connection between an axle and an axle mounting bracket. An example of this use is disclosed in U.S. Patent No. 4,615,539, to Pierce which is expressly incorporated herein by reference. The bushing can also be used to mount a hanger bracket to a trailing arm.

Applying FIG. 2 to a bushing in a truck suspension mounting as seen in U.S. Patent No. 4,615,539, the first member 14 would be a portion of a trailing arm and the second member 16 would be a portion of a mounting bolt used to secure the trailing arm to an axle mounting bracket on the vehicle frame. The trailing arm incorporates an aperture which receives the bushing 12 and the mounting bolt passes through the inner member of the bushing.

In the preferred embodiment, the bushing 12 is assembled by extruding the elastomeric material comprising the elastomeric insert 22 circumferentially around the outer diameter of the inner element 20. The elastomeric material is extruded such that, in the hardened state, the thickness of the elastomeric insert 22 is slightly wider than the distance between the outer diameter of inner element 20 and the inner diameter of outer element 18. With this configuration, the elastomeric insert 22 will be under compression when it is mounted inside the outer element 18. The bushing is completed by press-fitting the inner element 20 and the elastomeric insert 22 into the outer element 18, thereby compressing the insert 22 between the inner and outer elements.

The bushing 12 is adapted to be press-fit into the aperture 24 of the first member 14. The aperture 24 extends through the first member 14 and the circumference of the aperture 24 is nominally less than the circumference of the outer element 18. Preferably the outer element 18 is attached to the first member 14 by a friction fit within the aperture 24, but it may also be secured by adhesive or welding. Typically, the first member 14 is made from cast, wrought or drop-forged steel and the outer element is steel tubing. Through the use of these two materials and the environment of air and water in which the bushing typically operates, both the outer element and first member will rust to some degree. The combination of the rust between the two elements and the friction fit will result in suitable attachment of the outer element 18 to the first member 14.

The final step in assembling the bushing 12 is to press-fit the second member 16 into the inner element 20. Ideally, the outer diameter of second member 16 closely approximates the inner diameter of inner element 20. Alternatively, the inner element 20 is larger, axially, than the outer element 18. Thus the member 16 can be mechanically secured to the inner element 20 as by clamping while permitting the outer element 18 to move relative to the inner element.

As seen in FIGS. 3-6 and 10, the outer element 18, inner element 20 and elastomeric insert 22 are preferably generally circular in cross section wherein the outer and inner elements comprise circular tubes creating a tube-shaped bushing 12 with the inner element being axially received within the outer element 18. The bushing 12 is by no means limited to circular tube shapes. A wide variety of other geometric cross-sectional shapes including, but not limited to ovals, squares and triangles may be used.

Circular tubes may be manufactured by a wide variety of processes, but are commonly manufactured by centrifugal casting or by extruding or drawing a suitable material over a mandrel. The inner and outer elements of the bushing, according to the invention, can be formed by any such suitable process.

Ideally, the outer diameter of the outer element 18 will be equal to the inner diameter of the aperture 24 such that the outer surface of the outer element will bear at all points against the inner surface of the aperture 24. If the outer diameter of outer element 18 is significantly less than the inner diameter of aperture 24, then the bushing will be loosely mounted in the first member 14 which is unacceptable for uses such as a truck suspension system. Likewise, if the outer element is out of round beyond a close tolerance range, then additional operations are necessary to bring the dimensions within tolerance.

As seen in FIGS. 1 through 11, the bushing 12, according to the invention, incorporates an adjustable portion 28 on all or substantially all of the length of the outer element 18 so that the circumference thereof is variable. The outer element 18 has a maximum circumference nominally greater than the circumference of the aperture 24 and can be tightly received in the aperture of the first member 14 by reducing its circumference.

The outer element 18 incorporates an adjustable portion 28 which extends longitudinally, the entire length or substantially the entire length of outer element 18. As seen in FIGS. 1 and 3, the adjustable portion of a first embodiment of the outer element 18 comprises an axially extending slit 26. The inner element 20 is co-axially received within outer element 18 and the elastomeric insert is compressively mounted between the inner and outer elements, 20 and 18.

The circumference of the outer element 18 is predetermined to nominally exceed the circumference of the aperture 24 of the first member 14. By circumferentially compressing and plastically deforming the outer element 18, the circumference thereof may be slightly reduced such that the outer element 18 can be press-fit into the aperture 24. The adjustable portion 28 permits this circumferential compression, the compression is resisted by the strength of the steel outer element 18 and the elastomeric insert 22 contained therein.

The expansion force exerted by the elastomeric insert 22 on the split outer element 18 is generally not enough to overcome the strength or memory of the material forming the outer element 18 (typically steel). Therefore, the circumference of the outer member is generally unchanged by insertion of the elastomeric insert 22 therein. The compressive force exerted on the elastomeric insert 22 by the outer element 18 will result in contact between the insert 22 and the substantially all of the internal circumference of the outer element 18.

Once the outer element 18 is press-fit within the aperture 24, the memory of the steel causes the outer element to expand to the maximum circumference or diameter permitted by the aperture 24. The outer element 18 will also tend to conform to the shape of the aperture 24 and, thus, accommodate a slightly out-of-round condition. The expansion of the outer element 18 within the aperture 24 is also enhanced by the expansive force exerted by the compressed elastomeric insert 22. The combination of the memory of the steel and the force exerted by the elastomeric insert 22 results in the outer element 18 being tightly received along the entire length of aperture 24 despite variations in the overall circumference of the aperture 24.

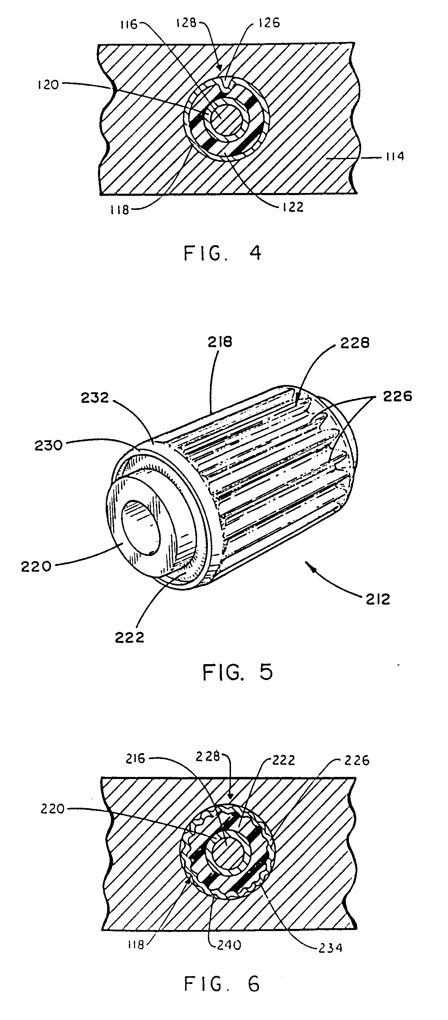

FIG. 4 shows an alternative embodiment for the adjustable portion, thereby providing different means for creating a variable circumference of the outer element. For this description, numerals analogous to the first embodiment will be increased by 100. In this embodiment, the adjustable portion 128 comprises an axially extending inner directed bend 126. As with the slit 26 of the first embodiment 18, the bend 126 permits limited expansion and contraction of the circumference of the outer element 118. The elastomeric insert 122 is compressively mounted between the inner element 120 and the outer element 118 and the strength or memory of the outer member 118 overcomes this force thereby creating an outer element 118 of a prescribed diameter which is nominally larger than the inner diameter of the aperture 124 of the first member 114.

As with the first embodiment, the outer element 118 is circumferentially compressed and press-fit into the aperture 124 of the first member 114. The force exerted by the memory of the steel of the outer element 118 in conjunction with the force exerted by the compressed elastomeric insert 122 causes the outer element 118 to expand outwardly to the maximum diameter permitted by the inner diameter of aperture 124 up to the prescribed diameter of outer element 118. This creates a tight fit along the length of the bushing 112 within the aperture 24.

FIGS. 5 and 6 show another embodiment for the adjustable portion, thereby providing different means for creating a variable circumference for the outer element. For this description, numerals analogous to the first embodiment will be increased by 200. In this embodiment, the adjustable portion 228 comprises a plurality of corrugations 226. Each individual corrugation is U-shaped. The corrugations 226 are arranged radially around the circumference of outer element 218 and extend longitudinally. The corrugations may extend the entire length or preferably extend only the substantial length of the outer element 218.

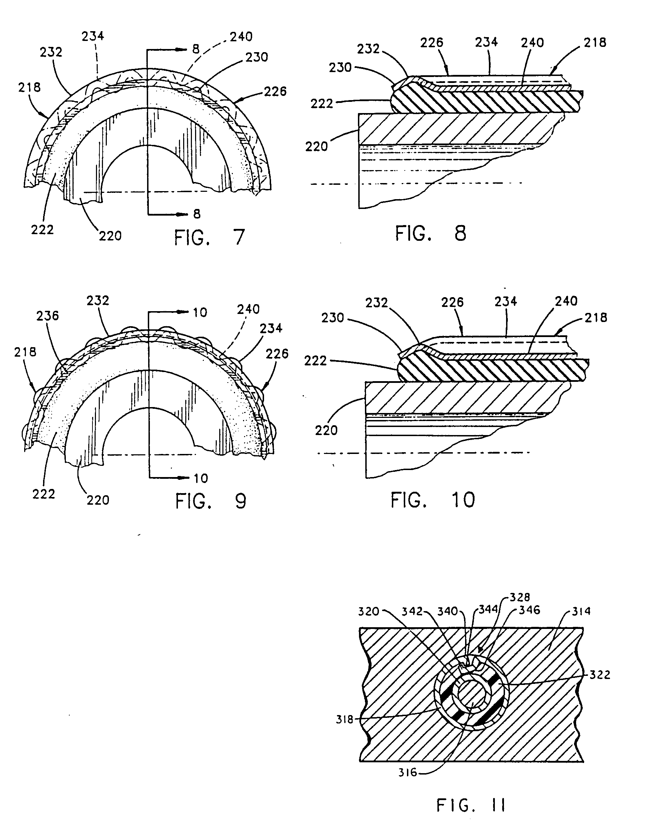

As seen in FIG. 5, the corrugations 234 span the bulk of the length of the body of outer element 218, however, the corrugations 234 do not extend to the ends of outer element 218. Rather, they terminate at an annular lip 236 on each of the ends of the outer element 218. The annular lip 236 extends around the entire circumference of ends of outer member 218. As seen in FIGS. 7 and 8, the annular lip 236 comprises a leading edge 230 and an arcuate portion 232. The leading edge 230 is angled radially inward toward the longitudinal axis of the outer element 218. The arcuate portion 232 extends radially outward from the leading edge 230 and then curves to meet the corrugations 226 which span the body of the outer element 218. The annular lip has a circumference nominally less than the predetermined circumference of the bushing 212. This lesser circumference is preferably created by a swaging operation at the outboard edge of the lip 236 but may also be created by a crimping operation.

The annular lip 236 serves two distinct functions for the bushing 212. First, the radially inward directed annular lip has a circumference nominally less than the predetermined circumference of the bushing and therefore facilitates the introduction of the bushing into the aperture. Secondly, the lip increases the shape factor of the bushing and therefore increases the durability of the elastomeric insert 222. The durability of the elastomeric insert 222 varies with changes in the shape factor of the bushing 212; the higher the shape factor the more durable the elastomeric insert 222.

The shape factor is a function of the ratio of the projected load carrying area of the bushing. This ratio is equal to the area of the elastomeric insert 222 which is in contact with the inner element 220 to the exposed area of the elastomeric insert 222. As seen in FIGS. 8 and 10, the leading edge 230 of the annular lip 236 wraps around the exposed edge of the elastomeric insert 222, thereby decreasing the area of the exposed end of the elastomeric insert 222. This decrease in the exposed area of the elastomeric insert 222 results in an increase in the shape factor, thereby evincing an increase in the durability of the elastomeric insert 222.

As seen in FIGS. 7 and 8, the radially outermost edge of the arcuate portion 232 extends radially outwardly such that the outer diameter of the arcuate portion 232 is substantially equal to the outer diameter of the peaks 234 of the corrugations 226. This correspondence between the diameters of the peaks 234 and the arcuate portion 232 may be varied, as seen in the fourth embodiment of FIGS. 8 and 9. In this embodiment, the outer diameter of arcuate portion 232 does not extend to the outer diameter of the peaks 234 of the corrugations 226, but rather to a point approximately midway between the peaks 234 and the valleys 240 of the corrugations 226.

As seen in FIG. 5, the incorporation of the annular lip 236 on the ends of the outer element 218 which has a diameter slightly less than the diameter of the corrugations 226 results in a slightly barrel-shaped outer member 218. This barrel-shape makes press-fit mounting of the bushing 218 within the aperture 224 easier yet does not detract from the tight, friction-fit of the bushing 212 within the aperture 224.

Although not shown separately in the drawings, bend 126 of the second embodiment of outer member 118 is similar to the corrugations 226 of the third embodiment in that the bend 136 may not extend the entire length of the outer member 118. Rather, annular lips as shown in FIGS. 8-10 may be incorporated which surround the circumference of the ends of the circular outer element thereby creating a slightly barrel-shaped cylinder.

FIG. 11 shows a fifth embodiment of the outer element with an adjustable portion which provides a variable circumference. For this description, numerals analogous to the first embodiment will be increased by 300. The variable circumference or diameter of the outer element 318 is achieved by a first edge 340 and a second edge 342 which interlocks with first edge 340. The first edge 340 terminates in a tongue 344, and the end of the second edge 342 defines a groove 346 complementary in shape to the tongue 344. The groove 346 is adapted to receive the tongue 344. The edges extend longitudinally, the entire length of outer element 318. The complementary tongue 344 and groove 346 permit limited changes in the diameter or circumference of the outer element 318.

## Claims

1. An elastomeric bushing for mounting a first member (14) to a second member (16) in vehicle suspensions, with limited articulation between the first and second members, the first member (14) having an aperture (24) defined by a cylindrical wall having a predetermined circumference, the bushing (12) being receivable within the aperture (24) and comprising an inner element (20) adapted to be securely fixed to the second member (16), an outer element (18) adapted to be received within the aperture (24) and to be securely fixed therein to the first member (14), the inner element (20) being disposed within and spaced from the outer element (18), and an elastomeric insert (22) compressively retained between the inner and outer elements (20, 18), **characterized** by:
the outer element (18) being formed of a material having sufficient strength or memory to resist deformation by a spring force of the elastomeric insert (22) in compression;
the outer element (18) further having an outer surface with a circumference nominally greater than the predetermined circumference; and, the outer element (18) further including an adjustable portion (28) for enabling the circumference thereof to be reduced by applying a force to the outer surface against the spring force, whereby upon reducing the circumference of the outer element (18) to a dimension less than the predetermined circumference by applying a force to the outer surface, the bushing assembly can be easily received in the aperture, where, upon release of the force, the outer surface will be urged to bear directly against the cylindrical wall to frictionally retain the bushing assembly within the aperture.

2. An elastomeric bushing according to claim 1, **characterized** in that the adjustable portion (128) comprises an axially extending inner directed bend (126) in the outer element (118).

3. An elastomeric bushing according to claim 2, **characterized** in that said outer element (218) further comprises a radially inwardly directed annular lip (236) on each end of the outer element (218) having a circumference nominally less than the predetermined circumference.

4. An elastomeric bushing according to anyone of the claims 1 to 3, **characterized** in that the outer element (318) is split axially having a first edge (340) and a second edge (342), and the adjustable portion (328) comprises the first edge (340) having a tongue (344) and the second edge (342) having a groove (346), the tongue (344) being received within the groove (346).

5. An elastomeric bushing according to anyone of the claims 1 to 4, **characterized** in that the adjustable portion (288) comprises axial corrugations (226) in the outer element (218).

6. An elastomeric bushing according to claim 5, **characterized** in that said outer element (218) further comprises a radially inward directed annular lip (236) on each end of the outer element (218) having a circumference nominally less than the predetermined circumference.

7. An elastomeric bushing according to claim 5 or 6, **characterized** in that said corrugations (226) are radially arranged around the entire circumference of said outer member (218).

8. An elastomeric bushing according to anyone of the foregoing claims, **characterized** in that the adjustable portion (28) comprises an axial slit (26) extending the entire length of the outer element (18).

9. An elastomeric bushing according to anyone of the foregoing claims, **characterized** in that said outer element (18) is generally tubular having a cross-sectional shape approximating a circle.

10. An elastomeric bushing according to anyone of the foregoing claims, **characterized** in that the cross-sectional shape of said inner element (20) is generally circular.

11. An elastomeric bushing according to anyone of the foregoing claims, **characterized** in that the inner (20) and outer (18) elements are coaxial.

12. A suspension system for mounting a wheel bearing axle to a vehicle frame, the suspension comprising:
a trailing arm;
a hanger bracket pivotably mounted to one end of the trailing arm through a first bushing and adapted to mount the trailing arm to a vehicle frame;
an air spring mounted to another end of the trailing arm and adapted to mount to a vehicle frame;
an axle bracket for mounting an axle and mounted to the trailing arm through a second bushing; and
at least one of said first and second bushings being a bushing according to anyone of claims 1 to 11.

## Patentansprüche

1. Elastische Polymerhülse zur Befestigung eines ersten Elements (14) an einem zweiten Element (16) in Fahrzeugaufhängungen, mit begrenzter Gelenkigkeit zwischen dem ersten und dem zweiten Element, wobei das erste Element (14) eine durch eine zylindrische Wand vorgegebenen Umfangs begrenzte Öffnung (24) hat und die Hülse (12) in der Öffnung (24) aufgenommen werden kann und ein inneres Element (20) umfaßt zur sicheren Festlegung an dem zweiten Element (16), ein äußeres Element (18) zur Aufnahme in der Öffnung (24) und zur sicheren Festlegung an dem ersten Element in dieser Öffnung, wobei das innere Element (20) in dem äußeren Element (18) angeordnet und von diesem beabstandet ist, und einen elastischen Polymereinsatz (22), der zwischen dem inneren und dem äußeren Element (20, 18) zusammengedrückt gehalten wird,
dadurch gekennzeichnet,
daß das äußere Element (18) aus einem Material gebildet ist, dessen Festigkeit oder Formerinnerungsvermögen ausreichend hoch ist, um einer Verformung durch eine Federkraft des elastischen Polymereinsatzes (22) im Kompressionszustand standzuhalten;
daß das äußere Element (18) ferner eine Außenfläche eines Umfangs hat, der nominal größer ist als der vorgegebene Umfang, und daß das äußere Element (18) des weiteren einen einstellbaren Bereich (28) enthält, durch welchen sein Umfang reduziert werden kann, indem eine gegen die Federkraft wirkende Kraft auf die Außenfläche ausgeübt wird, wodurch die Hülsenkonstruktion nach der durch Kraftausübung auf die Außenfläche erfolgenden Verringerung des Umfangs des äußeren Elements (18) auf ein Maß, das kleiner ist als der vorgegebene Umfang, problemlos in der Öffnung aufgenommen werden kann, in welcher die Außenfläche nach Aufheben der Kraft derart beaufschlagt wird, daß sie unmittelbar an der zylindrischen Wand anliegt, um die Hülsenkonstruktion reibschlüssig in der Öffnung zu halten.

2. Elastische Polymerhülse nach Anspruch 1, dadurch gekennzeichnet, daß der einstellbare Bereich (128) eine sich axial erstreckende, nach innen gerichtete Biegung (126) in dem äußeren Element (118) hat.

3. Elastische Polymerhülse nach Anspruch 2, dadurch gekennzeichnet, daß das äußere Element (218) an jedem seiner Enden ferner eine radial nach innen gerichtete ringförmige Lippe (236) hat, deren Umfang nominal kleiner ist als der vorgegebene Umfang.

4. Elastische Polymerhülse nach einem der Ansprüche 1 bis 3, dadurch gekennzeichnet, daß das äußere Element (318) axial gespalten ist und eine erste Kante (340) und eine zweite Kante (342) besitzt, und daß der einstellbare Bereich (328) die mit einer Zunge (344) versehene erste Kante (340) und die mit einer Nut (346) versehene zweite Kante (342) umfaßt, wobei die Zunge (344) in der Nut (346) aufgenommen wird.

5. Elastische Polymerhülse nach einem der Ansprüche 1 bis 4, dadurch gekennzeichnet, daß der einstellbare Bereich (288) axiale Wellungen (226) in dem äußeren Element (218) aufweist.

6. Elastische Polymerhülse nach Anspruch 5, dadurch gekennzeichnet, daß das äußere Element (218) an jedem seiner Enden ferner eine radial nach innen gerichtete ringförmige Lippe (236) hat, deren Umfang nominal kleiner ist als der vorgegebene Umfang.

7. Elastische Polymerhülse nach Anspruch 5 oder 6, dadurch gekennzeichnet, daß die Wellungen (226) radial um den gesamten Umfang des äußeren Elements (218) angeordnet sind.

8. Elastische Polymerhülse nach einem der vorhergehenden Ansprüche, dadurch gekennzeichnet, daß der einstellbare Bereich (28) einen sich über die gesamte Länge des äußeren Elements (18) erstreckenden axialen Schlitz (26) aufweist.

9. Elastische Polymerhülse nach einem der vorhergehenden Ansprüche, dadurch gekennzeichnet, daß das äußere Element (18) allgemein rohrförmig ist und eine annähernd runde Querschnittsform hat.

10. Elastische Polymerhülse nach einem der vorhergehenden Ansprüche, dadurch gekennzeichnet, daß die Querschnittsform des inneren Elements (20) allgemein rund ist.

11. Elastische Polymerhülse nach einem der vorhergehenden Ansprüche, dadurch gekennzeichnet, daß das innere Element (20) und das äußere Element (18) koaxial angeordnet sind.

12. Aufhängungssystem zur Befestigung einer Radhalterachse an einem Fahrzeugrahmen, umfassend:
einen hinteren Arm;
einen Hängebock, der durch eine erste Hülse schwenkbar an einem Ende des hinteren Arms gelagert ist für die Befestigung des hinteren Arms an einem Fahrzeugrahmen;
eine Luftfeder, die an einem anderen Ende des hinteren Arms montiert ist zur Befestigung an einem Fahrzeugrahmen;
eine Achshalterung, die zur Befestigung einer Achse dient und die durch eine zweite Hülse an dem hinteren Arm montiert ist, wobei zumindest die erste oder die zweite Hülse eine Hülse gemäß einem der Ansprüche 1 bis 11 ist.

## Revendications

1. Coussinet élastomère permettant de monter un premier élément (14) sur un second élément (16) dans des suspensions pour véhicules, avec une articulation limitée entre les premier et second éléments, le premier élément (14) ayant une ouverture (24) définie par une paroi cylindrique d'une circonférence prédéterminée, le coussinet (12) pouvant être reçu dans l'ouverture (24) et comprenant un élément intérieur (20) adapté pour être solidement fixé sur le second élément (16), un élément extérieur (18) adapté pour être reçu dans l'ouverture (24) et pour être solidement fixé dans celle-ci et par rapport au premier élément (14), l'élément intérieur (20) étant disposé à l'intérieur de, et espacé par rapport à, l'élément extérieur (18), et un insert élastomère (22) retenu et comprimé entre les éléments intérieur et extérieur (20, 18),
caractérisé en ce que:
l'élément extérieur (18) est formé à partir d'une matière présentant une résistance ou mémoire suffisante pour résister à une déformation par une force de ressort de l'insert élastomère (22) en compression;
l'élément extérieur (18) comporte en outre une surface extérieure dont la circonférence nominale est supérieure à la circonférence prédéterminée; et en ce que l'élément extérieur (18) comprend en outre une partie réglable (28) permettant de réduire la circonférence de celui-ci par l'application d'une force à la surface extérieure, à l'encontre de la force de ressort, de manière qu'en réduisant la circonférence de l'élément extérieur (18) à une dimension inférieure à la circonférence prédéterminée, par application d'une force à la surface extérieure, l'ensemble de coussinet puisse être reçu facilement dans l'ouverture où, après relâchement de la force, la surface extérieure est forcée en contact direct avec la paroi cylindrique de façon à retenir par friction l'ensemble de coussinet à l'intérieur de l'ouverture.

2. Coussinet élastomère selon la revendication 1, caractérisé en ce que la partie réglable (128) comporte un pli (126) dirigé vers l'intérieur, s'étendant axialement, ménagé dans l'élément extérieur (118).

3. Coussinet élastomère selon la revendication 2, caractérisé en ce que ledit élément extérieur (218) comprend en outre une lèvre annulaire (236) dirigée radialement vers l'intérieur, aménagée à chaque extrémité de l'élément extérieur (218), présentant une circonférence nominale inférieure à la circonférence prédéterminée.

4. Coussinet élastomère selon l'une quelconque des revendications 1 à 3, caractérisé en ce que l'élément extérieur (318) est fendu axialement et comporte un premier bord (340) et un second bord (342), et que la partie réglable (328) comporte le premier bord (340) pourvu d'une languette (344), et que le second bord (342) comporte une rainure (346), la languette (344) étant reçue dans la rainure (346).

5. Coussinet élastomère selon l'une quelconque des revendications 1 à 4, caractérisé en ce que la partie réglable (288) comporte des ondulations axiales (226) ménagées dans l'élément extérieur (218).

6. Coussinet élastomère selon la revendication 5, caractérisé en ce que ledit élément extérieur (218) comprend en outre une lèvre annulaire (236) dirigée radialement vers l'intérieur, aménagée à chaque extrémité de l'élément extérieur (218), présentant une circonférence nominale inférieure à la circonférence prédéterminée.

7. Coussinet élastomère selon la revendication 5 ou 6, caractérisé en ce que lesdites ondulations (226) sont agencées radialement tout autour de la circonférence dudit élément extérieur (218).

8. Coussinet élastomère selon l'une quelconque des revendications précédentes, caractérisé en ce que la partie réglable (28) comprend une fente axiale (26) s'étendant sur toute la longueur de l'élément extérieur (18).

9. Coussinet élastomère selon l'une quelconque des revendications précédentes, caractérisé en ce que l'élément extérieur (18) est globalement tubulaire, présentant une forme de section transversale à peu près circulaire.

10. Coussinet élastomère selon l'une quelconque des revendications précédentes, caractérisé en ce que la forme de section transversale de l'élément intérieur (20) est globalement circulaire.

11. Coussinet élastomère selon l'une quelconque des revendications précédentes, caractérisé en ce que les éléments intérieur (20) et extérieur (18) sont coaxiaux.

12. Système de suspension permettant de monter un essieu portant des roues sur un châssis d'un véhicule, la suspension comprenant:
un bras oscillant longitudinal;
une jumelle de suspension montée de façon pivotante sur une extrémité du bras oscillant longitudinal par l'intermédiaire d'un premier coussinet et adaptée pour monter le bras oscillant longitudinal sur un châssis de véhicule;
un ressort à air monté à l'autre extrémité du bras oscillant longitudinal et adapté pour être monté sur un châssis de véhicule;
une bride permettant le montage d'un essieu et montée sur le bras oscillant longitudinal par l'intermédiaire d'un deuxième coussinet; et
au moins un desdits premier et deuxième coussinets, qui est un coussinet selon l'une quelconque des revendications 1 à 11.
